# EUROPEAN PATENT APPLICATION

(11) **EP 3 150 965 A1**
(43) Date of publication of application: **05.04.2017**
(21) Application number: 16189151.0
(22) Date of filing: 16.09.2016
(51) Int. Cl.: G01C 21/36

(54) **PROCESSING METHOD BASED ON NAVIGATION INFORMATION AND CORRESPONDING APPARATUS**

(30) Priority: 29.09.2015 CN 201510633741
(71) Applicant: Xiaomi Inc., Beijing 100085 (CN)
(72) Inventor: ZHANG, Pengfei, BEIJING, 100085 (CN); WANG, Yi, BEIJING, 100085 (CN); LONG, Xiang, BEIJING, 100085 (CN); HUO, Erwei, BEIJING, 100085 (CN)
(74) Representative: Cougard, Jean-Marie

(57) **Abstract**

A processing method and apparatus based on navigation information and an electronic device are provided in the present disclosure, and the processing method includes: obtaining (202) the navigation information; determining (204) a business related to the navigation information; and executing (206) a pre-processing operation related to the business before arriving at an executing location of the business.

## Description

### FIELD

The present disclosure relates to the terminal technology field, and more particularly to a service processing method based on navigation information and an electronic device for implementing said processing method.

### BACKGROUND

Because a user is not familiar with a route and does not know a road condition etc. during travelling outside, navigation is usually adopted, e.g. a mobile phone or a tablet PC installed with navigation software, or a specific navigator or other electronic devices.

In related art, the navigation software may display maps on an electronic device, and information such as a current location of the user, a navigation route, and road conditions in the neighborhood etc. is shown in the map, thus the information obtained by the user is only limited to "navigation".

### SUMMARY

In order to solve problems in the related art, the present disclosure provides a processing method based on navigation information, and electronic device for implementing said processing method.

According to embodiments of a first aspect of the present disclosure, a processing method implemented by an electronic device based on navigation information is provided, and the processing method includes:
obtaining the navigation information;
determining a business related to the navigation information; and
executing a pre-processing operation related to the business before arriving at an executing location of the business.

In the present document, the terms "business" and "service" may be equally used. A business (or service) within the meaning of the present invention may be of any kind, such as a restaurant, an hotel, a mansion, an amusement park, a gas station, a scenic region etc. In the present disclosure, a business (or service) may also be referred to as a business-related (or service-related) point of interest.

In a particular embodiment, the navigation information includes: a navigation route; and determining a business related to the navigation information includes:
choosing a business with an executing location along the navigation route or at a terminal point of the navigation route.

In a particular embodiment, the navigation information further includes: a pre-estimated time when arriving at the executing location of each business; and determining a business related to the navigation information includes:
choosing the business with the executing location along the navigation route or at the terminal point of the navigation route, in which the pre-estimated time corresponding to the business is within a pre-determined business processing time period.

In a particular embodiment, the pre-estimated time is related to at least one of a type of a transportation tool used by a user, status information of the transportation tool and a traffic condition.

In a particular embodiment, the navigation information further includes: user attribute information in a preset dimension; and determining a business related to the navigation information includes:
choosing the business with the executing location along the navigation route or at the terminal point of the navigation route, in which the business satisfies a user requirement corresponding to the user attribute information.

In a particular embodiment, the preset dimension comprises at least one of a number of users, a user gender, a user age and a user relationship.

In a particular embodiment, determining a business related to the navigation information includes:
obtaining all of businesses via a pre-configured uniform service interface; and
choosing the business related to the navigation information from all of the businesses.

In a particular embodiment, executing a pre-processing operation related to the business includes:
executing a reservation operation for the business according to the navigation information.

In a particular embodiment, executing a pre-processing operation related to the business includes:
sending a notification message to a business provider, in which the notification message includes the navigation information.

In a particular embodiment, the processing method further includes:
reminding a user of the business related to the navigation information; and
determining according to a received user selection instruction whether or not to execute the pre-processing operation.

In a particular embodiment, the processing method further includes:
judging whether the user is at a pre-determined idle status; and
if the user is at the pre-determined idle status, reminding the user of the business related to the navigation information.

In a particular embodiment, the steps of the processing method are determined by computer program instructions.

Consequently, according to a fourth aspect, the invention is also directed to a computer program for executing the steps of a processing method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to embodiments of a second aspect of the present disclosure, a processing apparatus including:
an obtaining unit, configured to obtain navigation information;
a determining unit, configured to determine a business related to the navigation information; and
an executing unit, configured to execute a pre-processing operation related to the business before arriving at an executing location of the business.

In a particular embodiment, the navigation information includes: a navigation route; and the determining unit includes:
a first choosing sub-unit, configured to choose a business with an executing location along the navigation route or at a terminal point of the navigation route.

In a particular embodiment, the navigation information further includes: a pre-estimated time when arriving at the executing location of each business; and the determining unit includes:
a second choosing sub-unit, configured to choose the business with the executing location along the navigation route or at the terminal point of the navigation route, in which the pre-estimated time corresponding to the business is within a pre-determined business processing time period.

In a particular embodiment, the pre-estimated time is related to at least one of a type of a transportation tool used by a user, status information of the transportation tool and a traffic condition.

In a particular embodiment, the navigation information further includes: user attribute information in a preset dimension; and the determining unit includes:
a third choosing sub-unit, configured to choose the business with the executing location along the navigation route or at the terminal point of the navigation route, in which the business satisfies a user requirement corresponding to the user attribute information.

In a particular embodiment, the preset dimension includes at least one of a number of users, a user gender, a user age and a user relationship.

In a particular embodiment, the determining unit includes:
a obtaining sub-unit, configured to obtain all of businesses via a pre-configured uniform service interface; and
a choosing sub-unit, configured to choose the business related to the navigation information from all of the businesses.

In a particular embodiment, the executing unit includes: a reservation sub-unit, configured to execute a reservation operation for the business according to the navigation information.

In a particular embodiment, the executing unit includes: a sending sub-unit, configured to send a notification message to a business provider, in which the notification message includes the navigation information.

In a particular embodiment, the processing apparatus further includes:
a reminding unit, configured to remind a user of the business related to the navigation information; and
a pre-processing determining unit, configured to determine according to a received user selection instruction whether or not to execute the pre-processing operation.

In a particular embodiment, the processing apparatus further includes:
a judging unit, configured to judge whether the user is at a pre-determined idle status; and
in which, if the user is at the pre-determined idle status, the user is reminded of the business related to the navigation information.

According to embodiments of a third aspect of the present disclosure, an electronic device is provided in the present disclosure, and the electronic device includes:
a processor; and
a memory configured to store instructions executable by the processor;
in which the processor is configured to:
   obtain the navigation information;
   determine a business related to the navigation information; and
   execute a pre-processing operation related to the business before arriving at an executing location of the business.

The technical solutions provided in the present disclosure may include the following beneficial effects.

According to above embodiments of the present disclosure, the present disclosure may predict potential business requirements of users by determining the business related to the navigation information. Meanwhile, subsequent operations of the user posterior to arriving at the executing location of the business may be simplified by executing the pre-processing operations related to the business, also the loss of a process qualification for the business due to a long driving time may be avoided.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the present disclosure.
Fig. 1 is a schematic diagram of a navigation interface in the related art.
Fig. 2 is a flow chart of a processing method based on navigation information according to an example embodiment.
Fig. 3 is a flow chart of another processing method based on navigation information according to an example embodiment.
Figs. 4A-4B are schematic diagrams of an interface for obtaining navigation information according to an example embodiment.
Fig. 5 is a schematic diagram showing a business based on a navigation route according to an example embodiment.
Figs. 6A-6B are block diagrams showing a business based on a navigation route and arriving time according to an example embodiment.
Figs. 7-15 are block diagrams of a processing apparatus based on navigation information according to an example embodiment.
Fig. 16 is a schematic diagram of a device for processing a business based on navigation information according to an example embodiment.

### DETAILED DESCRIPTION

Example embodiments will be described in detail herein, and examples thereof are illustrated in accompanying drawings. Throughout figures referred by the following description, the same reference number in different figures indicates the same or similar elements unless otherwise stated. Implementations described in the following exemplary embodiments do not represent all the implementations consistent with the present disclosure. Instead, they are only examples of the device and method consistent with some aspects of the present disclosure detailed in the appended claims.

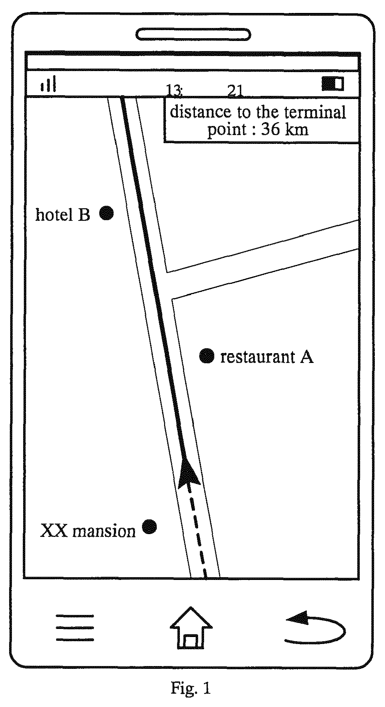

Fig. 1 is a schematic diagram of a navigation interface in the related art, as shown in Fig. 1, in the related art, when a user executes a navigation operation via an electronic device, in order to make it convenient for the user to search for a walking or driving route, a map is needed to be displayed on the electronic device, and information such as a current location of the user, a navigation route, and road conditions in the neighborhood is needed to be shown on the map so as to realize the navigation.

Meanwhile, based on a business retrieved from local or downloaded from a server by a navigation software, the navigation software may indicate businesses around the current location of the user on the map, e.g. restaurant A, hotel B and XX mansion etc. shown in Fig. 1, such that the user may execute operations like checking and reserving.

However, the navigation software in the related art is only used to indicate the businesses around the current location of the user, which is actually limited to the characteristics of the "navigation" operation itself, since the map is required to be enlarged to clearly show the information such as the road conditions around the user so as to ensure a succeed realization of the navigation operation, unless the user actively control the map to show locations along the navigation route or the terminal point, it is hard to execute operations like checking and reserving on the businesses at corresponding locations, however, these control operations may interrupt the navigation operation of the user, especially for a driving user, and a high driving risk may be caused.

Therefore, based on the analysis of the navigation information, the present disclosure may perform a pre-processing operation on the business related to the navigation information without affecting the navigation operation, such that the above-described technical problem existing in the related art may be solved.

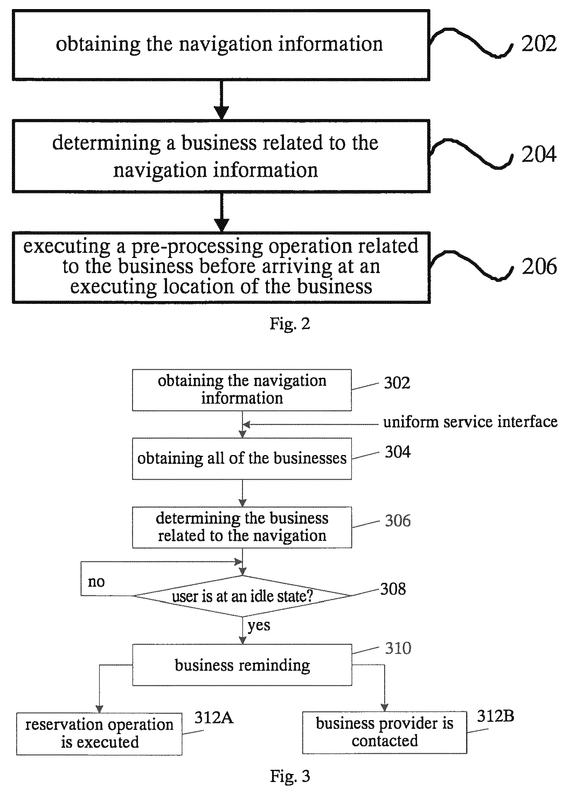

Fig. 2 is a flow chart of a processing method based on navigation information according to an example embodiment. As shown in Fig. 2, the processing method is implemented in an electronic device provided with a navigation software, and the processing method may include steps as follows.

In step 202, the navigation information is obtained.

In step 204, a business related to the navigation information is determined.

As indicated earlier, in the present document, a business (or service) may be of any kind, including a restaurant, an hotel, a mansion, an amusement park, a gas station or a scenic region for instance.

In an embodiment, the navigation information includes: a navigation route; in which, determining a business related to the navigation information includes: choosing a business with an executing location along the navigation route or at a terminal point of the navigation route.

In the present disclosure, the executing location refers to a position where the business is located.

In another embodiment, the navigation information further includes: a pre-estimated time when arriving at the executing location of each business; in which, determining a business related to the navigation information includes: choosing the business with the executing location along the navigation route or at the terminal point of the navigation route, in which the pre-estimated time corresponding to the business is within a pre-determined business processing time period.

The pre-estimated time is related to at least one of a type of a transportation tool used by a user and a traffic condition.

In yet another embodiment, the navigation information further includes: user attribute information in a preset dimension; in which, determining a business related to the navigation information includes: choosing the business with the executing location along the navigation route or at the terminal point of the navigation route, in which the business satisfies a user requirement corresponding to the user attribute information.

The preset dimension includes at least one of a number of users, a user gender, a user age and a user relationship.

In an embodiment, determining a business related to the navigation information includes: obtaining all of businesses via a pre-configured uniform service interface; and choosing the business related to the navigation information from all of the businesses.

In step 206, a pre-processing operation related to the business is executed before arriving at an executing location of the business.

In an embodiment, executing a pre-processing operation related to the business includes: executing a reservation operation for the business according to the navigation information.

In another embodiment, executing a pre-processing operation related to the business includes: sending a notification message to a business provider, in which the notification message includes the navigation information.

Further, in an embodiment, the processing method further includes: reminding a user of the business related to the navigation information; and determining according to a received user selection instruction whether or not to execute the pre-processing operation.

The processing method further includes: judging whether the user is at a pre-determined idle status; and if the user is at the pre-determined idle status, reminding the user of the business related to the navigation information.

According to the above embodiments of the present disclosure, the present disclosure may predict potential business requirements for users by determining the business related to the navigation information. Meanwhile, subsequent operations of the user posterior to arriving at the executing location of the business may be simplified by executing the pre-processing operations related to the business, also the loss of a process qualification for the business due to a long driving time may be avoided.

Fig. 3 is a flow chart of another processing method based on navigation information according to an example embodiment. As shown in Fig. 3, the processing method is used in an electronic device provided with a navigation software, and the processing method may include steps as follows.

In step 302, the navigation information is obtained.

In the present embodiment, the electronic device may obtain the navigation information in any way, which is not limited in the present disclosure. Some examples are explained as follows.

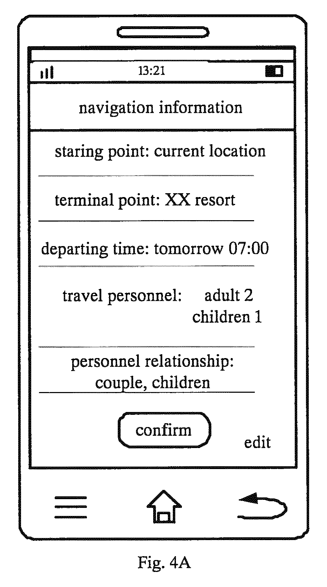

In a situation, a user may input the navigation information manually. As shown in Fig. 4A, the user may directly input pre-configured or customized items including a starting point, a terminal point, departing time, travel personnel, personnel relationship etc., and the electronic device may generate information of these items as the navigation information directly.

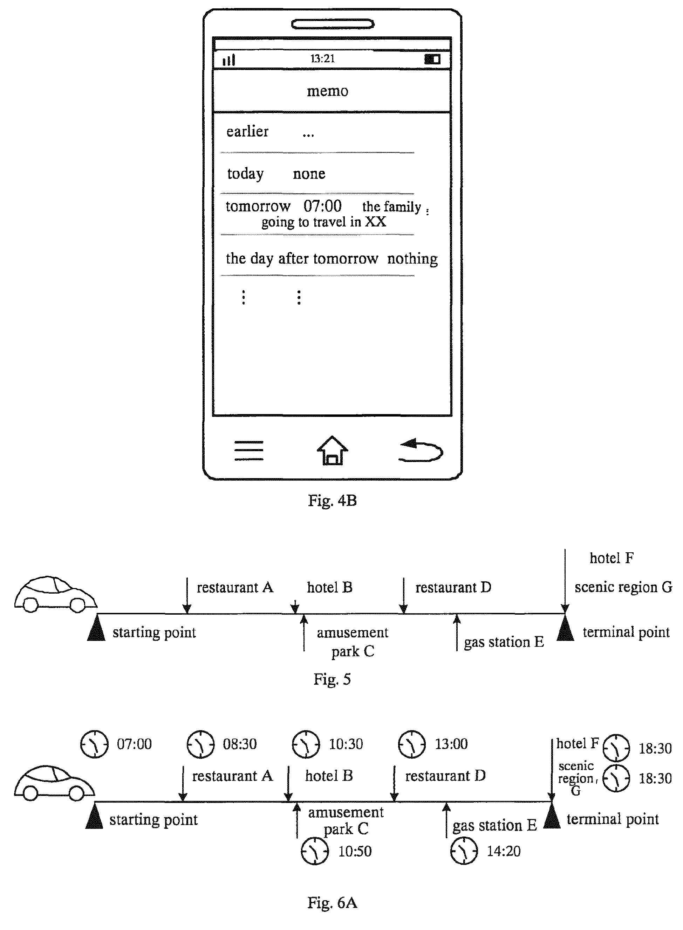

In another situation, the electronic device may extract and generate corresponding navigation information according to a memo, a calendar event, and a travel plan etc. created by the user. For example, as shown in Fig. 4B, assuming that the user's memo records: an event of "the family going to travel in XX" needs to be executed at "07:00" "tomorrow", the electronic device may generate corresponding navigation information, and in the navigation information, 7 o'clock tomorrow morning is configured as the departing time, the current location is configured as the starting point, and "XX" place is configured as the terminal point. In addition, the electronic device may further analyze data such as family composition of the user based on behavior data in terms of normal consumption, communication etc. of the user, such that information such as a total number of travel personnel and the personnel relationship may be further speculated for the user.

Of course, the device with which the user executes the input operation for data such as the navigation information or the address book, may be an electronic device configured for the navigation operation; or, the user may choose any other device to input data such as the above-described navigation information or the address book, and then executes a login operation on each device with a same user account, such that the electronic device configured for the navigation operation obtains the data such as the navigation information or the address book via network.

In step 304, all of the businesses are obtained via a pre-configured uniform service interface.

In the present embodiment, the uniform service interface may be opened to business providers (such as each merchant) via the navigation software in advance, thus the business providers provide data such as business description information thereof to the navigation software.

Then, the navigation software may obtain all of the businesses via the pre-configured uniform service interface and choose the business related to the navigation information from all of the businesses.

In step 306, the business related to the navigation information (navigation-related business) is determined.

In the present embodiment, the navigation information necessarily includes a navigation route, and may further include other optional contents etc.; based on the difference of the contents of the navigation information, the navigation software may determine the business related to the navigation information according to different methods. Examples are explained for step 306 according to several possible situations below.

### Embodiment 1

As an example embodiment, if the navigation information includes the navigation route, a business with a corresponding executing location along the navigation route or at the terminal point of the navigation route may be chosen.

As shown in Fig. 5, after the user defines a starting point and a terminal point, the navigation software generates the corresponding navigation route, and then by combining all of the businesses obtained in step 304 and the corresponding executing locations, the business along the navigation route or at the terminal point of the navigation route may be determined. For example, in Fig. 5, if the user doesn't change the navigation route during the driving process, it is estimated that restaurant A, hotel B, amusement park C, restaurant D, gas station E, hotel F and scenic region G etc. are passed by successively, in which restaurant A and restaurant D etc. may provide businesses such as catering, hotel B and hotel F etc. may provide businesses such as accommodation, amusement part C and scenic region G etc. may provide businesses such as entertainment, and gas station E may provide businesses such as refuelling.

Therefore, the navigation software may determine the businesses provided by the above-described restaurant A - scenic region G etc. along the navigation route or at the terminal point of the navigation route as the businesses that the user may need, such that the businesses are regarded as the businesses related to the navigation information.

### Embodiment 2

As another example embodiment, if the navigation information includes an estimated time when arriving at the executing location of each business except for including the navigation route, a business with a corresponding executing location along the navigation route or at the terminal point of the navigation route may be chosen, and a pre-estimated time corresponding to the business is within a pre-determined business processing time period.

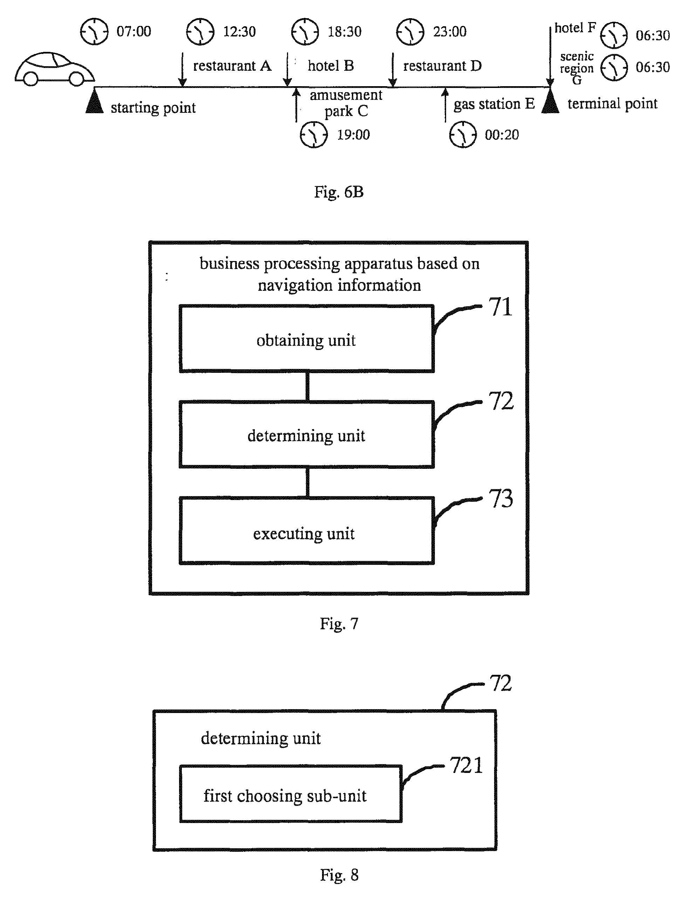

Based on the determined navigation route, the navigation software may obtain the pre-estimated time when the user arrives at the executing location along the navigation route or at the terminal point of the navigation route according to at least one of a type of a transportation tool used by the user, status information of the transportation tool and a traffic condition.
1) For example, as shown in Fig. 6A, assuming that the type of a transportation tool used by the user is a self-driving vehicle, and the traffic condition is well, then after the user sets out at 07:00 from the starting point, the navigation software may estimate that the user arrives at restaurant A at 08:20, arrives at restaurant B at 10:30, arrives at amusement part C at 10:50, arrives at restaurant D at 13:00, arrives at gas station E at 14:00, arrives at hotel F and scenic region G at 18:30.
   (1) For a "catering" business, the pre-determined business processing time period is a normal time period for drinking and eating, such as 08:00 - 09:00 for breakfast, 12:00-13:30 for lunch, and 18:00 - 21:00 for dinner, then since the navigation software estimates that the user arrives at restaurant A at 08:30, arrives at restaurant D at 13:00, and arrives at hotel F at 18:30, it may be determined that the user needs a breakfast business provided by restaurant A, a lunch business provided by restaurant D, a dinner business provided by hotel F, such that the catering businesses corresponding respectively to restaurant A, restaurant D and hotel F are chosen as the businesses related to the navigation information.
   (2) For an "accommodation" business, the pre-determined business processing time period is a normal time period for accommodation, such as 18:00 - 06:00 (the next day), since the navigation software estimates that the user arrives at hotel B at 10:30 and arrives at hotel F at 18:30, it may be determined that the user needs the accommodation business provided by hotel F rather than hotel B, such that the accommodation business corresponding to hotel F is chosen as the business related to the navigation information.
   (3) For an "entertainment" business, the pre-determined business processing time period is a normal time period for entertainment, such as 09:00 - 20:00, since the navigation software estimates that the user arrives at amusement part C at 10:50 and arrives at scenic region G at 18:30, it may be determined that the user needs the entertainment business provided respectively by amusement part C and scenic region G, such that the entertainment businesses corresponding respectively to amusement part C and scenic region G are chosen as the businesses related to the navigation information.
   (4) For a "refueling" business, the pre-determined business processing time period is related to the status information of the transportation tool and the traffic condition. For example, if a remaining amount of fuel in the tank of the user's vehicle can only support the user to drive X kilometers in a good traffic condition, according to the user's driving habit, a speed-limit condition along the navigation route, and the traffic condition etc., the driving time that the remaining amount of fuel in the tank can support may be estimated, thus the corresponding business processing time period can be determined. For example, if the estimated driving time is 9 hours, starting from 07:00 when the user departs to 16:00 when the fuel is used up, the terminal point is still not arrived, then the business processing time period may be determined as a certain time period (which should be less than the pre-determined driving time 9 hours) previous to 16:00, such as 3 hours, the time when arriving at the gas station E may be determined to belong to the business processing time period, and the refuelling business should be regarded as the business related to the navigation information.
2) As shown in Fig. 6B, assuming that the type of a transportation tool used by the user is a self-driving vehicle, and the traffic condition is a traffic jam, then after the user sets out at 07:00 from the starting point, the navigation software may estimate that the user arrives at restaurant A at 12:30, arrives at restaurant B at 18:30, arrives at amusement part C at 19:00, arrives at restaurant D at 23:00, arrives at gas station E at 00:20, arrives at hotel F and scenic region G at 6:30.
   (1) For the "catering" business, the pre-determined business processing time period is a normal time period for drinking and eating, such as 08:00 - 09:00 for breakfast, 12:00-13:30 for lunch, and 18:00 - 21:00 for dinner, then since the navigation software estimates that the user arrives at restaurant A at 12:30, and arrives at hotel B at 18:30, it may be determined that the user needs a lunch business provided by restaurant A, and a dinner business provided by hotel B, such that the catering businesses corresponding respectively to restaurant A and hotel B are chosen as the businesses related to the navigation information.
   (2) For an "accommodation" business, the pre-determined business processing time period is a normal time period for accommodation, such as 18:00 - 06:00 (the next day), since the navigation software estimates that the user arrives at hotel B at 18:30 and arrives at hotel F at 6:30, it may be determined that the user needs the accommodation business provided by hotel B rather than hotel F, such that the accommodation business corresponding to hotel B is chosen as the business related to the navigation information.
   (3) For an "entertainment" business, the pre-determined business processing time period is a normal time period for entertainment, such as 09:00 - 20:00, since the navigation software estimates that the user arrives at amusement part C at 19:00 and arrives at scenic region G at 6:30, it may be determined that the user needs the entertainment business provided by amusement part C rather than scenic region G, such that the entertainment business corresponding to amusement part C is chosen as the business related to the navigation information.
   (4) For a "refueling" business, assuming that the vehicle may drive 9 hours with the remaining fuel, starting from 07:00 when the user departs to 16:00 when the fuel is used up, the terminal point is still not arrived, therefore the business processing time period may be determined as a certain time period (which should be less than the pre-determined driving time 9 hours) previous to 16:00, such as 3 hours, i.e. 13:00 -16:00. However, since the user is estimated to arrive at the gas station E at 00:20, another gas station should be chosen as the business provider, and the corresponding business processing time period may be re-determined according to the remaining fuel after the refuelling is completed in time, such that the user may determine whether the gas station E is configured as the business related to the navigation information.

### Embodiment 3

As yet another example embodiment, if the navigation information includes the user attribute information in a preset dimension except for including the navigation route, a business with a corresponding executing location along the navigation route or at the terminal point of the navigation route may be chosen, and the business satisfies a user requirement corresponding to the user attribute information.

For example, the preset dimension includes at least one of a number of users, a user gender, a user age and a user relationship; of course, the preset dimension may also include other types, which shall not be limited herein.

Taking the "entertainment" business as an example: if the user attribute information indicates there is only an adult, although the business along includes the entertainment businesses provided by amusement part C and scenic region G, the adult obviously rather prefers to go to scenic region G rather than amusement part C, therefore the entertainment business provided by scenic region G is chosen as the business related to the navigation information; and if the user attribute information indicates that there are parents along with children, it is most possible that amusement part C is preferred to go, therefore the entertainment businesses provided by amusement part C and scenic region G may be chosen respectively as the businesses related to the navigation information.

It should be noted that:
in an aspect, except for factors of the "arriving time" in the above-described embodiment 2 and the "user attribute" in the embodiment 3, an appropriate business may also be chosen as the business related to the navigation information by combining optional contents with other types, which shall not be limited herein; and
in another aspect, multiple optional contents in the navigation information may be applied by combining each other, for example, in the embodiment shown in Fig. 6A, although the user is estimated to arrive at amusement part C at 10:50, if the user attribute information indicates there is only an adult, it is most possible that the user will not choose to go to amusement part C, and therefore it is not required to regard the entertainment business provided by amusement part C as the business related to the navigation information.

In step 308, if the user is at the idle status, step 310 is executed, otherwise waiting for a while.

In step 310, a business reminding operation is executed.

As an example embodiment, the navigation software may complete the pre-processing operation on the chosen business automatically, without an attention or operation of the user.

As another example embodiment, the navigation software may complete the pre-processing operation on the chosen business automatically, and remind the user of the business related to the navigation information in step 310, such as displaying on a screen of the electronic device, and broadcasting with speech etc., such that the user may understand the situation of the business in time.

As yet another example embodiment, the navigation software may remind the user of the business related to the navigation information, and the user sends a selection instruction indicating whether or not to execute the pre-processing, and then the navigation software determines according to the received user selection instruction whether or not to execute the pre-processing operation corresponding to the business. In the embodiment, according to the intervention of the user, inconvenience for the user and the business provider caused by an incorrect determination for the user's requirement may be avoided.

Alternatively, the business reminding operation for the user may be executed after judging that the user is at the idle status in step 308, such as when the user stops at a red light, takes a rest at a service area or meets a traffic jam, so as to avoid affecting behaviours like the user's normal driving.

In step 312A, a reservation operation is executed.

As an example, the reservation operation for the business may be executed by the navigation software according to the navigation information. For example, for the catering business, a table may be reserved or food may be pre-ordered; for the accommodation business, a room may be reserved; and for the entertainment business, tickets may be reserved etc. According to the reservation operation, no additional operation is required after the user arrives; meanwhile, a situation that the corresponding business cannot be provided after the user arrives, such as a situation that there is no more room left in the hotel may be avoided.

In step 312B, the business provider is contacted.

As another example embodiment, the navigation software may send a notification message to a business provider, and the notification message includes the navigation information.

For example, the navigation information may include a navigation route, the business provider may know a possible arriving time of the user so as to make preparations ahead, and then after the user arrives at the executing location of the business, the service may be provided to the user as soon as possible.

For another example, the navigation information may include user attribute information, such as a number of users, a user gender, a user age and a user relationship etc., and the size of the table, the type of the room and the number of the tickets etc. may be determined according to this with regard to the catering business, the accommodation business, and the entertainment business etc.

Of course, step 312A and step312 B only indicate two pre-processing methods for examples, but all of the pre-processing operations related to the execution of the business may be realized through the technical solutions of the present disclosure, which shall not be elaborated herein.

Corresponding to the above-described embodiments of the processing method based on the navigation information, the present disclosure also provides embodiments of a processing apparatus based on the navigation information.

Fig. 7 is a block diagram of a processing apparatus based on navigation information according to an example embodiment. Referring to Fig. 7, the processing apparatus includes an obtaining unit 71, a determining unit 72 and an executing unit 73.

The obtaining unit 71 is configured to obtain the navigation information.

The determining unit 72 is configured to determine a business related to the navigation information.

The executing unit 73 is configured to execute a pre-processing operation related to the business before arriving at an executing location of the business.

As shown in Fig. 8, Fig. 8 is a block diagram of another processing apparatus based on navigation information according to an example embodiment, based on the above-described embodiment shown in Fig. 7, the navigation information includes: a navigation route; in which, the determining unit 72 includes: a first choosing sub-unit 721.

The first choosing sub-unit 721 is configured to choose a business with an executing location along the navigation route or at a terminal point of the navigation route.

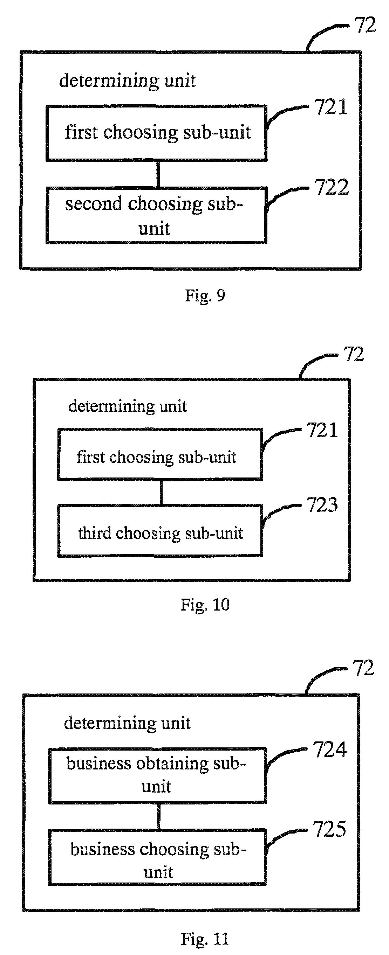

As shown in Fig. 9, Fig. 9 is a block diagram of another processing apparatus based on navigation information according to an example embodiment, based on the above-described embodiment shown in Fig. 8, the navigation information further includes: a pre-estimated time when arriving at the executing location of each business; in which, the determining unit 72 includes: a second choosing sub-unit 722.

The second choosing sub-unit 722 is configured to choose the business with the executing location along the navigation route or at the terminal point of the navigation route, and the pre-estimated time corresponding to the business is within a pre-determined business processing time period.

Alternatively, the pre-estimated time is related to at least one of a type of a transportation tool used by a user, status information of the transportation tool and a traffic condition.

As shown in Fig. 10, Fig. 10 is a block diagram of another processing apparatus based on navigation information according to an example embodiment, based on the above-described embodiment shown in Fig. 8, the navigation information further includes: user attribute information in a preset dimension; in which, the determining unit 72 includes: a third choosing sub-unit 723.

The third choosing sub-unit 723 is configured to choose the business with the executing location along the navigation route or at the terminal point of the navigation route, and the business satisfies a user requirement corresponding to the user attribute information.

Alternatively, the preset dimension includes at least one of a number of users, a user gender, a user age and a user relationship.

As shown in Fig. 11, Fig. 11 is a block diagram of another processing apparatus based on navigation information according to an example embodiment, based on the above-described embodiment shown in Fig. 7, the determining unit 72 includes: a obtaining sub-unit 724 and a choosing sub-unit 725.

The obtaining sub-unit 724 is configured to obtain all of businesses via a pre-configured uniform service interface.

The choosing sub-unit 725 is configured to choose the business related to the navigation information from all of the businesses.

It should be noted that, the structures of the obtaining sub-unit 724 and the choosing sub-unit 725 shown in the apparatus embodiment of Fig. 11 may also be included in the apparatus embodiments of the above-described Figs 8-10, which shall not be elaborated herein.

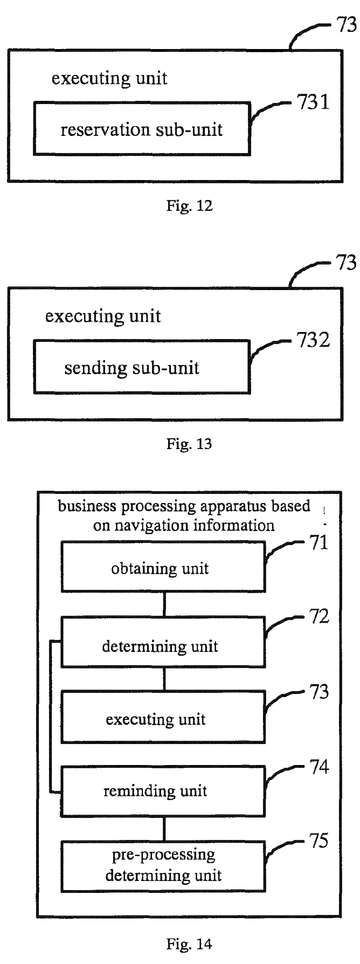

As shown in Fig. 12, Fig. 12 is a block diagram of another processing apparatus based on navigation information according to an example embodiment, based on the above-described embodiment shown in Fig. 7, the executing unit 73 includes: a reservation sub-unit 731.

The reservation sub-unit 731 is configured to execute a reservation operation for the business according to the navigation information.

It should be noted that, the structure of the reservation sub-unit 731 shown in the apparatus embodiment of Fig. 12 may also be included in the apparatus embodiments of the above-described Figs 8-11, which shall not be elaborated herein.

As shown in Fig. 13, Fig. 13 is a block diagram of another processing apparatus based on navigation information according to an example embodiment, based on the above-described embodiment shown in Fig. 7, the executing unit 73 includes: a sending sub-unit 732.

The sending sub-unit 732 is configured to send a notification message to a business provider, and the notification message includes the navigation information.

It should be noted that, the structure of the sending sub-unit 732 shown in the apparatus embodiment of Fig. 13 may also be included in the apparatus embodiments of the above-described Figs 8-11, which shall not be elaborated herein.

As shown in Fig. 14, Fig. 14 is a block diagram of another processing apparatus based on navigation information according to an example embodiment, based on the above-described embodiment shown in Fig. 7, the processing apparatus further includes: a reminding unit 74 and a pre-processing determining unit 75.

The reminding unit 74 is configured to remind a user of the business related to the navigation information.

The pre-processing determining unit 75 is configured to determine according to a received user selection instruction whether or not to execute the pre-processing operation.

It should be noted that, the structures of the reminding unit 74 and the pre-processing determining unit 75 shown in the apparatus embodiment of Fig. 14 may also be included in the apparatus embodiments of the above-described Figs 8-13, which shall not be elaborated herein.

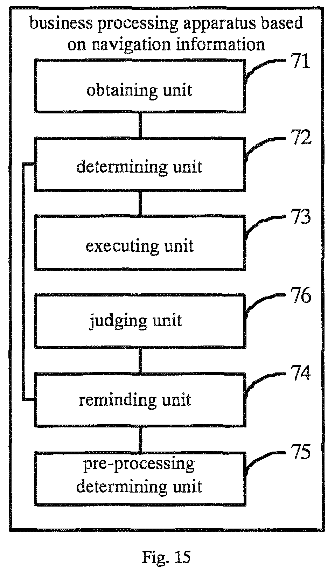

As shown in Fig. 15, Fig. 15 is a block diagram of another processing apparatus based on navigation information according to an example embodiment, based on the above-described embodiment shown in Fig. 14, the processing apparatus further includes: a judging unit 76.

The judging unit 76 is configured to judge whether the user is at a pre-determined idle status.

If the user is at the pre-determined idle status, the user is reminded of the business related to the navigation information.

With respect to the apparatus in the above embodiments, the specific operation modes of individual modules therein have been described in detail in the embodiments regarding the processing methods, which will not be elaborated herein.

Since the apparatus embodiments are substantially corresponding to the processing method embodiments, the related aspects may be referred to the description in the processing method embodiments. The apparatus embodiments described above are only exemplary, and modules illustrated as separate components therein may be or may not be physically separated from each other, and components represented as modules may be or may not be physical modules, i.e., may be located in a same place or may be distributed in multiple network units. Some or all of the modules may be selected according to the actual requirements so as to achieve objectives of the present disclosure, which may be understood or implemented by those skilled in the art without creative work.

Accordingly, a processing apparatus based on navigation information is also provided in the present disclosure, and the device includes a processor and a memory configured to store instructions executable by the processor. The processor is configured to obtain the navigation information; determine a business related to the navigation information; and execute a pre-processing operation related to the business before arriving at an executing location of the business.

Accordingly, a terminal is also provided in the present disclosure, and the terminal includes a memory, and one or more programs, in which the one or more programs are stored in the memory, and are configured to execute instructions of following operations by one or more processors: obtain the navigation information; determine a business related to the navigation information; and execute a pre-processing operation related to the business before arriving at an executing location of the business.

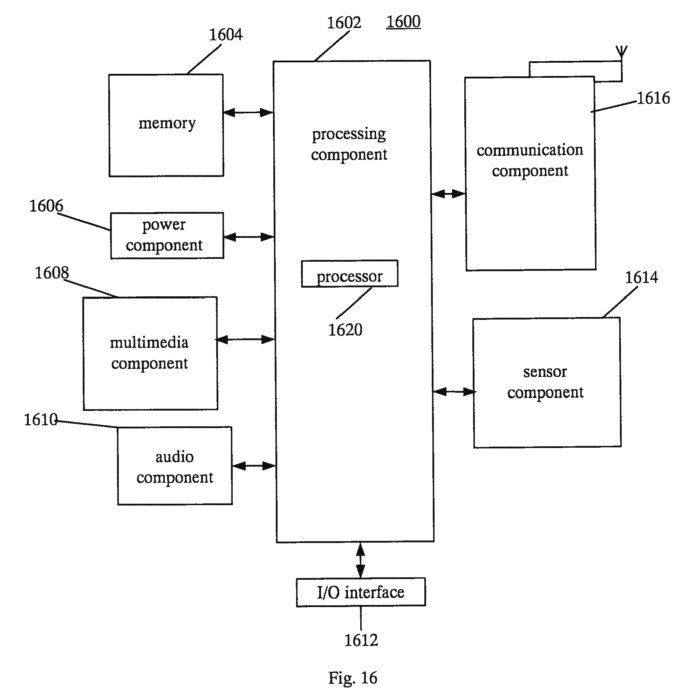

Fig. 16 is a schematic diagram of a device 1600 for processing a business based on navigation information according to an example embodiment. For example, the device 1600 may be a mobile phone, a computer, a digital broadcasting terminal, a messaging device, a game console, a tablet device, a medical device, an exercise equipment, and a personal digital assistant, etc.

Referring to Fig. 16, the device 1600 may include one or more of following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as the operations associated with display, telephone calls, data communications, camera operations, and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power in the device 1600.

The multimedia component 1608 includes a screen providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1608 includes a front camera and/or a rear camera. The front camera and the rear camera may receive external multimedia data while the device 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the device 1600. For instance, the sensor component 1614 may detect an open/closed status of the device 1600 and relative positioning of components (e.g., the display and the keypad of the device 1600). The sensor component 1614 may also detect a change in position of the device 1600 or of a component in the device 1600, a presence or absence of user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate wired or wireless communication between the device 1600 and other devices. The device 1600 can access a wireless network based on a communication standard, such as WIFI, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 1604 including instructions. The above instructions are executable by the processor 809 in the device 1600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention as defined in the appended set of claims, including such departures from the present disclosure as come within known or customary practice in the art.

## Claims

1. A processing method implemented by an electronic device based on navigation information, comprising:
obtaining (202) the navigation information;
determining (204) a business related to the navigation information; and
executing (206) a pre-processing operation related to the business before arriving at an executing location of the business.

2. The processing method according to claim 1, wherein the navigation information comprises: a navigation route; and determining (204) a business related to the navigation information comprises:
choosing a business with an executing location along the navigation route or at a terminal point of the navigation route.

3. The processing method according to claim 2, wherein,
the navigation information further comprises: a pre-estimated time when arriving at the executing location of each business; and determining (204) a business related to the navigation information comprises: choosing the business with the executing location along the navigation route or at the terminal point of the navigation route, wherein the pre-estimated time corresponding to the business is within a pre-determined business processing time period;
or
the navigation information further comprises: user attribute information in a preset dimension; and determining (204) a business related to the navigation information comprises: choosing the business with the executing location along the navigation route or at the terminal point of the navigation route, wherein the business satisfies a user requirement corresponding to the user attribute information;
or
determining (204) a business related to the navigation information comprises: obtaining (304) all of businesses via a pre-configured uniform service interface; and choosing (306) the business related to the navigation information from all of the businesses.

4. The processing method according to claim 3, wherein, the pre-estimated time is related to at least one of a type of a transportation tool used by a user, status information of the transportation tool and a traffic condition; the preset dimension comprises at least one of a number of users, a user gender, a user age and a user relationship.

5. The processing method according to any of claims 1-4, wherein executing (206) a pre-processing operation related to the business comprises:
executing (312A) a reservation operation for the business according to the navigation information
or
sending a notification message to a business provider, wherein the notification message comprises the navigation information.

6. The processing method according to any of claims 1-5, further comprising:
reminding a user of the business related to the navigation information; and
determining according to a received user selection instruction whether or not to execute the pre-processing operation.

7. The processing method according to claim 6, further comprising:
judging (308) whether the user is at a pre-determined idle status; and
if the user is at the pre-determined idle status, reminding the user of the business related to the navigation information.

8. A computer program including instructions for executing the steps of a processing method according to any one of claims 1 to 7 when said program is executed by a computer.

9. A processing apparatus based on navigation information, comprising:
an obtaining unit (71), configured to obtain the navigation information;
a determining unit (72), configured to determine a business related to the navigation information; and
an executing unit (73), configured to execute a pre-processing operation related to the business before arriving at an executing location of the business.

10. The processing apparatus according to claim 9, wherein the navigation information comprises: a navigation route; and the determining unit (72) comprises:
a first choosing sub-unit (721), configured to choose a business with an executing location along the navigation route or at a terminal point of the navigation route.

11. The processing apparatus according to claim 10, wherein,
the navigation information further comprises: a pre-estimated time when arriving at the executing location of each business; and the determining unit (72) comprises: a second choosing sub-unit (722), configured to choose the business with the executing location along the navigation route or at the terminal point of the navigation route, wherein the pre-estimated time corresponding to the business is within a pre-determined business processing time period;
or
the navigation information further comprises: user attribute information in a preset dimension; and the determining unit (72) comprises: a third choosing sub-unit (723), configured to choose the business with the executing location along the navigation route or at the terminal point of the navigation route, wherein the business satisfies a user requirement corresponding to the user attribute information;
or
the determining unit (72) comprises: a obtaining sub-unit (724), configured to obtain all of businesses via a pre-configured uniform service interface; and a choosing sub-unit (725), configured to choose the business related to the navigation information from all of the businesses.

12. The processing apparatus according to claim 11, wherein, the pre-estimated time is related to at least one of a type of a transportation tool used by a user, status information of the transportation tool and a traffic condition; the preset dimension comprises at least one of a number of users, a user gender, a user age and a user relationship.

13. The processing apparatus according to any of claims 9-12, wherein, the executing unit (73) comprises:
a reservation sub-unit (731), configured to execute a reservation operation for the business according to the navigation information; or
a sending sub-unit (732), configured to send a notification message to a business provider, wherein the notification message comprises the navigation information.

14. The processing apparatus according to any of claims 9-13, further comprising:
a reminding unit (74), configured to remind a user of the business related to the navigation information; and
a pre-processing determining unit (75), configured to determine according to a received user selection instruction whether or not to execute the pre-processing operation.

15. The processing apparatus according to claim 13, further comprising:
a judging unit (76), configured to judge whether the user is at a pre-determined idle status; and
wherein, if the user is at the pre-determined idle status, the user is reminded of the business related to the navigation information.
